Europäisches Patentamt

European Patent Office

Office européen des brevets

(11) Veröffentlichungsnummer: **0 006 181**
A1

# EUROPÄISCHE PATENTANMELDUNG

(21) Anmeldenummer: 79101776.7

(22) Anmeldetag: 05.06.79

(51) Int. Cl.³: **A 23 L 1/28**, A 23 B 7/10

(30) Priorität: 05.06.78 DE 2824553

(71) Anmelder: **Finanzpat AG, Baarenstrasse 10, CH-6300 Zug (CH)**

(43) Veröffentlichungstag der Anmeldung: 09.01.80
Patentblatt 80/1

(72) Erfinder: **Schmitz, Helga, Hofackerstrasse 1, D-3575 Kirchhain (DE)**

(84) Benannte Vertragsstaaten: **AT BE CH FR GB IT LU NL SE**

(74) Vertreter: **Eltle, Werner, Dipl.Ing. et al, Arabellastrasse 4 Sternhaus, D-8000 München 81 (DE)**

(54) Verfahren zum Weichmachen von zähen Speisepilzen.

(57) Bei einem Verfahren zum Weichmachen von zähen Speisepilzen oder Speisepilzteilen werden diese einer enzymatischen Behandlung unterzogen.

Zwecks Erzielung weicher, genießbarer Pilzfruchtkörper angenehmer Konsistenz und guten Geschmacks wird das gereinigte Pilzmaterial in einer sauren Lösung mit einem pH-Wert zwischen 3 und 5,5 und einem Salzgehalt von 0,02 bis 0,5 Mol, gegebenenfalls unter Zusatz von Glutanasen und Chitinasen bei Temperaturen von 20 bis 55° C aerob oder anaerob zwischen 12 Stunden und 5 Tagen bebrütet und gegebenenfalls aufgekocht und unter vermindertem Druck verpackt. Damit ist auch eine Konservierung des Pilzmaterials unabhängig von den Ernteperioden möglich.

EP 0 006 181 A1

- 1 -

## Verfahren zum Weichmachen von zähen Speisepilzen

Alle Pleurotus-Arten, die kultiviert werden, haben zähe Stiele, die ca. 20 bis 25 % der Produktion ausmachen und als Abfallprodukt weggeworfen werden.
Die Fruchtkörper sind leicht verderblich. Sie werden durch Lagerung im Kühlschrank zäher. Einfrieren ist nur dann geeignet, wenn vorher blanchiert wird. Getrocknete Pilze werden nach Dehydratisierung gummiartig (T.R. Gormley and F. O'Riordian, Lebensm.-Wiss. u. -Technol., Bd. 9 (1976), S. 75 bis 78). Auch alle weiteren angewandten Konservierungsverfahren haben eine mehr oder weniger lange Hitzebehandlung zur Voraussetzung, aber jede Hitzebehandlung (Blanchieren, Kochen, Sterilisieren, Trocknen) erhöht die Zähigkeit der Fruchtkörper und vor allem der Stiele.
Es ist in der Vergangenheit auch wiederholt der Versuch unternommen worden, Pilze zu silieren. Außer der langen Dauer, dem Zuckerzusatz und der Unkontrollierbarkeit der Gärung hatte die Silierung auch den Nachteil, daß das Material blanchiert wurde (W. Botticher, Technologie der Pilzverwertung, Verlag Eugen Ulmer, 1974). Bei einer Schnellsilierung (R. Kselik, Ceska mykol., Bd. 10 (1956), S. 190) wurden die Pilze vorher sogar 10 bis 15 min gekocht. Das Produkt war ohne Sterilisation nur 2 bis 3 Tage haltbar.

- 2 -

Die bisher angewandten Konservierungsverfahren sind deshalb
nicht geeignet.

Der Erfindung liegt die Aufgabe zugrunde, weiche, genießbare
Pilzfruchtkörper oder Teile davon sowie ein Verfahren zu
ihrer Herstellung aus ungenießbaren zähen Pilzfruchtkörpern
oder Teilen davon zu schaffen.
Eine weitere Aufgabe der Erfindung ist es, dem zähen Pilzmaterial eine angenehme Konsistenz und einen guten Geschmack zu verleihen.
Eine weitere Aufgabe der Erfindung ist es, das Pilzmaterial
zu konservieren, ohne daß eine Verschlechterung der Konsistenz eintritt.
Schließlich ist es noch eine Aufgabe der Erfindung, die Konservierung des Pilzmaterials unabhängig von den Ernteperioden
zu machen.

Die Lösung der erfindungsgemäßen Aufgabe beruht auf der Entwicklung eines Bebrütungsverfahrens unter Verwendung von pilzeigenen oder zugesetzten Enzymen (Glucanasen und Chitinasen).
Die Erfindung betrifft somit den in dem Patentanspruch
anspruch  gekennzeichneten Gegenstand.

Das erfindungsgemäße Verfahren gestattet es, frische oder
unterschiedlich lang eingefrorene oder hitzebehandelte, zähe
Pilzfruchtkörper oder deren Teile in ein Pilzprodukt von weicher, sehr angenehmer Konsistenz, appetitlichem Aussehen und
gutem Aroma zu verwandeln.
Das Verfahren erlaubt ferner  eine Konservierung des Pilzprodukts mit einfachen Mitteln.

Das erfindungsgemäße Verfahren hat folgende Vorteile:

1.  Bisher mußten Pilzstiele wegen ihrer Zähigkeit weggeworfen werden. Durch das neuartige Verfahren werden sie erstmals für die menschliche Ernährung nutzbar.

– 3 –

2. Durch das neuartige Verfahren erhalten zähe Pilzfruchtkörper bzw. deren Teile eine angenehm weiche Konsistenz.

3. Alle bisher angewandten Konservierungsverfahren haben
eine Hitzebehandlung zur Voraussetzung, die die Zähigkeit von Pilzfruchtkörpern und Teilen davon vergrößert
und Kosten verursacht. Im erfindungsgemäßen Verfahren
kann rohes Pilzmaterial verarbeitet werden.

4. Durch Hitzebehandlung zäh gewordenem Pilzmaterial kann
durch das neuartige Verfahren ebenfalls eine angenehme
Konsistenz verliehen werden.

5. Im erfindungsgemäßen Verfahren kann auch Pilzmaterial verwendet werden, das beliebig lange eingefroren war, da
Einfrieren die Enzymaktivitäten nicht beeinträchtigt.

6. Das erfindungsgemäße Verfahren erlaubt es, nach dem Weichwerden des Pilzmaterials dieses mit Hitze zu behandeln,
ohne daß eine Konsistenzverschlechterung eintritt.

7. Das Zähwerden von Pilzmaterial durch Hitzebehandlung
kann verhindert werden, indem man es einer kurzen Vorbehandlung gemäß dem Verfahren der Erfindung unterwirft.

8. Das erfindungsgemäße Verfahren macht die Konservierung
von den Ernteperioden unabhängig, da das eingesetzte Pilzmaterial beliebig lange in gefrorenem Zustand gelagert
werden kann.

9. Das erfindungsgemäße Verfahren ermöglicht gleichzeitig
eine gute Konservierung des Pilzproduktes.

10. Das erfindungsgemäße Verfahren ergibt ein Pilzprodukt,
dessen Geschmack entsprechend den Verbraucherwünschen
variiert werden kann.

11. Das erfindungsgemäße Verfahren benötigt nur geringen Aufwand an Energie, Zeit und Kosten.

Das erfindungsgemäße Verfahren erfordert 2 wesentliche Schritte:

A) Vorbereitung des Pilzmaterials;

B) Weichmachen des Pilzmaterials durch Bebrütung.

Im Anschluß an die Bebrütung können sich folgende weitere Schritte anschließen:

C) Würzen;

D) Aufkochen und Verpacken.

Nachstehend werden die einzelnen Schritte des erfindungsgemäßen Verfahrens näher erläutert:

A) Vorbereitung des Pilzmaterials

Als Ausgangsmaterial dienen frischgeerntete, zähe Pilzfruchtkörper oder deren Teile, z.B. von Pleurotus-Arten, oder bei -2° bis -40°C eingefrorenes Material, das bis zu 2 Jahren gelagert worden ist, oder durch Hitzebehandlung zäh gewordenes Pilzmaterial.

Die Pilzfruchtkörper können ungewaschen verarbeitet werden, wenn das Anbauverfahren sauberes Material liefert, anderenfalls werden sie geputzt und gewaschen.

Die Pilzfruchtkörper werden ganz oder zerkleinert in Gefäße beliebiger Größe gefüllt und mit der sauren Lösung bedeckt.

B) Weichmachen des Materials

Es wird eine saure Lösung im pH-Bereich von 3 bis 5,5 (am besten pH 4) verwendet, die einen Salzgehalt einer Molarität von 0,02 bis 0,5 m (am besten 0,1 bis 0,15 m) aufweisen kann. Die Fruchtkörper oder deren Teile werden weich bei Temperaturen von 20° bis 55°C (am besten 35° bis 40°C) nach einer aeroben oder anaeroben Bebrütung von 12 Stunden bis zu 10 Tagen.

Als saure Lösung können vor allem Pufferlösungen verwendet werden, wie z.B. Essigsäurepuffer, Citronensäurepuffer, Milchsäurepuffer oder Sauermolke aus der fermentativen Milchsäuerung.

- 5 -

Bei Fruchtkörpern von Pilzstämmen, die zu langsam weich werden, weil sie nicht genügend Glucanasen und Chitinasen enthalten, oder bei Fruchtkörpern, die durch Hitzebehandlung zäh geworden sind, werden Enzyme zugesetzt, und zwar in Form von

a) enzymreichen Fruchtkörperstücken;

b) Lösungen von enzymreichen Fruchtkörperstücken nach dem Weichmachen;

c) Preßsaft von enzymreichen Fruchtkörpern nach Lagerung in gefrorenem Zustand;

d) wäßrigen Extrakten aus zerkleinerten, enzymreichen, frischen oder gefrorenen Fruchtkörpern;

e) Enzymen (Glucanasen und Chitinasen), die mit organischen, wassermischbaren Lösungsmitteln oder mit hohen Salzkonzentrationen aus den Lösungen b) - d) ausgefällt wurden;

f) Enzymen entsprechend e), die mehr oder weniger gereinigt wurden.

C) Würzen

Das weichgemachte Pilzprodukt kann mit verschiedenen Gewürzen, wie sie zur Herstellung von Pilzgerichten üblicherweise verwendet werden, abgeschmeckt werden, wobei ein Zusatz von Kochsalz auch schon vor der Enzymbehandlung möglich ist.

D) Aufkochen und Verpackung

Um Schimmel- oder Hefewachstum zu verhindern, wird das fertige Produkt kurz gekocht (5 bis 10 min) und unter vermindertem Druck verschlossen.

- 6 -

Um das Weichwerden der Pilzfruchtkörper oder deren Teilen zu überprüfen, wurde die im folgenden erläuterte Konsistenzmessung durchgeführt:

Das zu überprüfende Pilzstück wurde in den umgekehrten Deckel einer Petrischale von 5 cm Durchmesser gelegt und mit dem Bodenteil beschwert (s.Abb.). Darauf wurden Gewichte von 1oo g (= 3oo Pa) bis zu 3 kg (= 9ooo Pa) gelegt. Stücke, die sich bis zu 45oo Pa zerdrücken ließen, wurden als "weich" definiert.

Die nachfolgenden Beispiele erläutern das erfindungsgemäße Verfahren (Beispiele 1-7 zu Verfahrensschritten A) und B), Beispiele 8 und 9 zu den Verfahrensschritten C) und D)):

Beispiel 1:

A) Als Material wurden frische Stiele von Pleurotus ostreatus, Stamm Somycel 3oo4, verwendet.
   Die Stiele wurden gereinigt, in ca. 1 g schwere Stücke geschnitten und entweder in kleine Gefäße (= k, Reagenzgläser 25 x 25o mm) oder in mittlere Gefäße (= m, 1/4 1 Schraubdeckelgläser) oder in große Gefäße (= g, 1 1 Einmachgläser) gefüllt.

B) Das vorbereitete Material wurde mit o,15 m Milchsäurepuffer (a) oder mit o,15 m Citronensäurepuffer (b), beide pH 4, bedeckt und 24 bzw. 48 Stunden lang bei 4o°C bebrütet. (s. Tabelle 1)

Tabelle 1: Weichmachen von frischem, enzymreichem Material in Citronensäure-, bzw. Milchsäurepuffer

| % weiche Stücke nach | | Puffer | Gefäß- |
| 24 h | 48 h | | größe |
|---|---|---|---|
| 1oo | 1oo | (a) | k |
| 9o | 1oo | (a) | m |
| 1oo | 1oo | (a) | g |
| 9o | 1oo | (b) | k |
| 9o | 1oo | (b) | m |
| 1oo | 1oo | (b) | g |

Beispiel 2:

A) Als Material wurden Stiele von Pl. ostreatus, Stamm Somycel 3oo4, verwendet, die unterschiedlich lang bei -18°C gelagert worden waren. Das Material wurde wie in Beispiel 1 vorbereitet.

B) Die Stielstücke wurden mit o,15 m Citronensäurepuffer von pH 4 bedeckt und 24, bzw. 48 Stunden lang bei 4o°C bebrütet.(s. Tabelle 2).

Beispiel 3:

A) Als Material wurden frische und 3 Monate lang bei -18°C gelagerte Stiele von Pl. ostreatus, Typ Florida bzw. Stamm Somycel 3oo4, verwendet. Das Material wurde wie in Beispiel 1 vorbereitet und danach 5 min auf 121°C erhitzt, so daß alle weichmachenden Enzyme zerstört waren.

B) Anschließend wurden frische Stücke von Pl. ostreatus, Stamm Somycel 3oo4, im Verhältnis 1:1 zugegeben, mit Milchsäurepuffer vom pH 4 bedeckt und 3 Tage lang bei 4o°C bebrütet.(s. Tabelle 3)

- 8 -

Tabelle 2: Weichmachen von enzymreichen Stielstücken,
die unterschiedlich lang bei -18°C gelagert
wurden, in Milchsäurepuffer

| % weiche Stücke nach | | Gefrierdauer | Gefäß- |
| 24 h | 48 h | (Monate) | größe |
| --- | --- | --- | --- |
| 9o | 1oo | 1 | k |
| 1oo | 1oo | 1 | m |
| 9o | 1oo | 1 | g |
| 1oo | 1oo | 3 | k |
| 1oo | 1oo | 3 | m |
| 1oo | 1oo | 3 | g |
| 1oo | 1oo | 6 | k |
| 8o | 1oo | 6 | m |
| 9o | 1oo | 6 | g |
| 1oo | 1oo | 9 | k |
| 8o | 1oo | 9 | g |
| 9o | 1oo | 12 | k |
| 9o | 1oo | 12 | g |

Tabelle 3: Weichmachen von hitzebehandelten Stielstücken
durch Zusatz von frischen, enzymreichen
Stielstücken

| Behandlung | Gefäß- größe | % weiche Stücke von | | | |
| --- | --- | --- | --- | --- | --- |
| | | Somycel 3oo4 | | Florida | |
| | | frisch | gefroren | frisch | gefroren |
| Kontrolle: | k | 0 | 0 | 0 | 0 |
| auf 121°C erhitzt | m | 0 | 0 | 0 | 0 |
| | g | 0 | 0 | 0 | 0 |
| auf 121°C erhitzt | k | 1oo | 1oo | 1oo | 1oo |
| + frische Stiel- | m | 1oo | 1oo | 1oo | 1oo |
| stücke | g | 1oo | 1oo | 1oo | 1oo |

Beispiel 4:

A) Material und Vorbereitung wie in Beispiel 3

B) Von dem in Beispiel 1 und 2 48 Stunden lang behandelten Material wurde die enzymhaltige Pufferlösung abfiltriert und auf das vorbereitete Material gegeben.
Es wurde 5 Tage lang bei 40°C bebrütet. (s. Tabelle 4).

Tabelle 4: Weichmachen von hitzebehandelten Stielstücken
durch Zusatz von enzymhaltiger Pufferlösung

| Behandlung | Gefäß-größe | % weiche Stücke von | | | |
|---|---|---|---|---|---|
| | | Somycel 3004 | | Florida | |
| | | frisch | gefroren | frisch | gefroren |
| Kontrolle: auf 121°C erhitzt | k | 0 | 0 | 0 | 0 |
| | m | 0 | 0 | 0 | 0 |
| | g | 0 | 0 | 0 | 0 |
| auf 121°C erhitzt + Lösung von Bei-spiel 1 | k | 1oo | 1oo | 1oo | 1oo |
| | m | 1oo | 1oo | 1oo | 1oo |
| | g | 1oo | 1oo | 1oo | 1oo |
| auf 121°C erhitzt + Lösung von Bei-spiel 2 | k | 1oo | 1oo | 1oo | 1oo |
| | m | 1oo | 1oo | 1oo | 1oo |
| | g | 1oo | 1oo | 1oo | 1oo |

Beispiel 5:

A) Material und Vorbereitung wie Beispiel 3.

B) Unterschiedlich lang bei -18°C eingefrorene Stiele
von Pl. ostreatus, Stamm Somycel 3oo4, wurden, nach
Auftauen bis auf 2°C, ausgepreßt. Der Preßsaft wurde
mit 1 m Citronensäure auf pH 4 titriert und sterilfiltriert. Diese Lösung wurde auf das vorbereitete Material gegeben. Es wurde 5 Tage lang bei 40°C bebrütet.
(s. Tabelle 5)

Tabelle 5: Weichmachen von hitzebehandelten Stielstücken
durch Zusatz von enzymhaltigem Preßsaft

| Behandlung | Gefäß-größe | % weiche Stücke von | | | |
| | | Somycel 3oo4 | | Florida | |
| | | frisch | gefroren | frisch | gefroren |
| --- | --- | --- | --- | --- | --- |
| Kontrolle:<br>auf 121°C erhitzt | k | 0 | 0 | 0 | 0 |
| | m | 0 | 0 | 0 | 0 |
| | g | 0 | 0 | 0 | 0 |
| auf 121°C erhitzt<br>+ Preßsaft | k | 1oo | 1oo | 1oo | 1oo |
| | m | 1oo | 1oo | 1oo | 1oo |
| | g | 1oo | 1oo | 1oo | 1oo |

Beispiel 6:

A) Material und Vorbereitung wie in Beispiel 3

B) Sowohl frische wie auch gefrorene Stiele von Pl. ostreatus, Stamm Somycel 3oo4, wurden kleingeschnitten und im Waring Blendor mit Essigsäurepuffer vom pH 4 unter Kühlung 1o min lang homogenisiert, dann zentrifugiert. Die so erhaltene enzymreiche Lösung wurde auf das vorbereitete Material gegeben. Es wurde 5 Tage lang bei 4o°C bebrütet.

Tabelle 6: Weichmachen von hitzebehandelten Stielstücken
durch Zusatz von wäßrigen Extrakten aus enzymreichem Material

| Behandlung | % weiche Stücke von | | | |
| | Somycel 3oo4 | | Florida | |
| | frisch | gefroren | frisch | gefroren |
| --- | --- | --- | --- | --- |
| Kontrolle: auf 121$^o$C erhitzt | 0 | 0 | 0 | 0 |
| auf 121$^o$C erhitzt + Extrakt aus frischen Stielen | 1oo | 1oo | 1oo | 1oo |
| auf 121$^o$C erhitzt + Extrakt aus gefro- renen Stielen | 1oo | 1oo | 1oo | 1oo |

Beispiel 7:

A) Als Material wurden nur gefrorene Stiele von Pl. ostreatus, Stamm Somycel 3oo4, verwendet, die wie in Beispiel
3 vorbereitet wurden, wobei nur kleine Gefäße genommen
wurden.

B) Aus enzymreichen Lösungen, wie Pufferlösungen von weichgemachten Stielen nach Beispiel 1 und 2, Preßsäften und
wäßrigen Extrakten aus enzymreichen Stielen nach Beispiel 5 und 6, wurden Enzyme ausgefällt:

a) Die gekühlte Lösung wurde mit Aceton im Verhältnis
1:4 versetzt. Der entstehende Niederschlag wurde in
der Kälte abzentrifugiert, 2 mal mit kaltem Aceton
und 1 mal mit kaltem Diäthyläther gewaschen.

b) Die gekühlte Lösung wurde mit Ammoniumsulfat bis zu
8o % Sättigung versetzt, der Niederschlag abzentrifugiert und 2 mal mit 8o %igem Ammoniumsulfat gewaschen.

Das Zentrifugat wurde mit kristallinem Ammoniumsulfat bis zu 100prozentiger Sättigung versetzt. Der da-

- 12 -

bei entstehende Niederschlag wurde ebenfalls abzentrifugiert und zweimal mit 100prozentiger, d.h. gesättigter Ammoniumsulfatlösung gewaschen.

Die ausgefällten Enzyme aus a) und b) wurden entweder direkt verwendet oder bei -18°C eingefroren oder gefriergetrocknet.

Das Enzym-präparat wurde vor der Verwendung in o,15 m Citronensäurepuffer vom pH4 so gelöst, daß eine gegenüber der Ausgangslösung 1ofach konzentrierte Enzymlösung entstand. Ein Teil dieser Lösung wurde direkt verwendet, ein anderer Teil wurde erst 8 Stunden bei $2^o$- $4^oC$ mit Pufferlösung dialysiert.

Die saure Enzymlösung wurde auf die vorbereiteten Stielstücke gegeben und 3 Tage bie $4o^oC$ bebrütet.

Tabelle 7: Weichmachen von hitzebehandelten Stielstücken mit Enzympräparaten

| Ausfällen des Enzyms mit | Anwendung des Enzyms | % weiche Stiele von Somycel 3oo4 |
|---|---|---|
| Aceton | direkt | 1oo |
| Aceton | gefroren | 1oo |
| Aceton | gefriergetrocknet | 1oo |
| 8o % $(NH_4)_2SO_4$ | direkt | 1oo |
| 8o % $(NH_4)_2SO_4$ | gefroren | 1oo |
| 8o % $(NH_4)_2SO_4$ | gefriergetrocknet | 1oo |
| 1oo % $(NH_4)_2SO_4$ | direkt | 1oo |
| 1oo % $(NH_4)_2SO_4$ | gefroren | 1oo |
| 1oo % $(NH_4)_2SO_4$ | gefriergetrocknet | 1oo |

Die Ergebnisse sind gleich für ungereinigte und dialysierte Enzyme.

Die mit Ammoniumsulfat ausgefällten Proteine wurden auf
Glucanase- und Chitinaseaktivität getestet.
Als Substrat für die Versuche diente nach den Vorschriften
von J.G.H. Wessels (Wentia, Bd. 13 (1965), S. 1 - 113) isoliertes R-Glucan und S-Glucan und kolloidales Chitin, das nach
den Vorschriften von L.R. Berger und D.M. Reynolds (Biochim.
Biophys. Acta, Bd. 29 (1958), S. 522) aus Chitin hergestellt
wurde.

Die Glucosebestimmung erfolgte mit Merck-o-test Blutzucker
(Merck, Nr. 3306), die Glucosaminbestimmung mit Indol
nach Z. DISCHE ( in Glick, Methods of biochemical analysis,
Vol. 2, S. 353, Interscience Publishers, New York, 1955),
nach einer Einwirkungszeit der Enzyme auf das Substrat von
1 Stunde. (s. Tabelle 8)

| Protein ausgefällt mit | Glucose aus R-Glucan | Glucose aus S-Glucan | Glucosamin aus Chitin |
|---|---|---|---|
| 8o % $(NH_4)_2SO_4$ | +++ | + | ++ |
| 1oo % $(NH_4)_2SO_4$ | ++ | (+) | ++ |

+++ : Starke Reaktion

++ : deutliche Reaktion

+ : schwache Reaktion

(+) : sehr schwache Reaktion

Das Verfahren der Beispiele 1 bis 7 wird mit Sauermolke, die
bei der fermentativen Milchsäuerung anfällt, wiederholt. Es
werden im wesentlichen gleiche Ergebnisse erhalten.

- 14 -

**Beispiel 8:**

Die weichgemachten Stiele aus Beispiel 1 wurden mit Salz, Zwiebeln, Pfefferkörnern und Lorbeerblatt abgeschmeckt, 5 min gekocht und vakuumverpackt.

**Beispiel 9:**

Die weichgemachten Stiele aus Beispiel 2 wurden mit Salz, Zucker, geschältem Meerrettich und einigen Nelken abgeschmeckt, 1o min gekocht und vakuumverpackt.

0006181

Patentanspruch:

Verfahren zum Weichmachen von zähen Speisepilzen oder Speisepilzteilen durch enzymatische Behandlung, dadurch gekennzeichnet, daß gereinigtes Pilzmaterial in einer sauren Lösung mit einem pH-Wert zwischen 3 und 5,5 und einem Salzgehalt von 0,02 bis 0,5 Mol, gegebenenfalls unter Zusatz von Glutanasen und Chitinasen bei Temperaturen von 20 bis $55^{\circ}$C aerob oder anaerob zwischen 12 Stunden und 5 Tagen bebrütet und gegebenenfalls aufgekocht und unter vermindertem Druck verpackt wird.

**Europäisches Patentamt**

**EUROPÄISCHER RECHERCHENBERICHT**

Nummer der Anmeldung

0006181

EP 79 10 1776

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CHEMICAL ABSTRACTS, vol. 77, 1972 August 14, ref. Nr. 46818r, Seite 352 Columbus, Ohio, USA Z. BANO et al.: "Steeping preservation of an adible mushroom" (Agaricus bisporus) & J. Food Sci Technol., 1972, 9 (1) 13-15 (GB) * Zusammenfassung * -- | 1 |
| | FR - A - 2 197 531 (BLANCHAUD et al.) * Ansprüche 1-6; Seite 3, Zeile 21 - Seite 4, Zeile 15 * -- | 1 |
| | FR - A - 2 050 070 (BOUSQUET E.) * Ansprüche 1-4 * -- | 1 |
| | DE - C - 271 938 (P. DREVERHOFF) * Ansprüche 1-2 * -- | 1 |
| A | FR - A - 786 121 (F. BOUCHARD) | |
| A | FR - A - 1 596 887 (PHILIP MORRIS) | |
| A | GB - A - 1 009 430 (MEIJI SEIKA KAISHA et al.) | |
| A | CHEMICAL ABSTRACTS, vol. 55, Spalte 3923 f-g, 1961 Columbus, Ohio, USA R. KSELIK: "Rapid method for souring mushrooms" & Ceska mykol., 10, Nr. 3, 190-192 (1956) ---- | |

**KLASSIFIKATION DER ANMELDUNG (Int.Cl.²)**

A 23 L 1/28
A 23 B 7/10

**RECHERCHIERTE SACHGEBIETE (Int. Cl.²)**

A 23 L 1/28
A 23 L 1/23
A 23 L 1/34
A 23 B 7/10
A 23 B 7/06
A 23 B 7/14
C 12 D 13/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-09-1979 | DESMEDT |

EPA form 1503.1 06.78